# EUROPEAN PATENT SPECIFICATION

(11) **EP 3 229 584 B1**
(45) Date of publication and mention of the grant of the patent: **13.05.2020**
(21) Application number: 15823831.1
(22) Date of filing: 04.12.2015
(51) Int. Cl.: A01K 27/00, A01K 15/02

(54) **A PROTECTING DEVICE FOR AN ELONGATED FLEXIBLE MEMBER AND AN ELONGATED FLEXIBLE MEMBER WITH A PROTECTING DEVICE**
SCHUTZGEGENSTAND FÜR LÄNGLICHEN OBJEKTEN UND LÄNGLICHE OBJEKTE MIT SCHUTZGEGENSTAND
ELEMENT DE PROTECTION POUR OBJET LONGIFORME FLEXIBLE ET OBJET LONGIFORME FLEXIBLE AVEC ELEMENT DE PROTECTION

(30) Priority: 11.12.2014 PL 41052214
(43) Date of publication of application: 18.10.2017
(73) Proprietor: SKRYPLONEK, Lukasz, 72-200 Nowogard (PL)
(72) Inventor: SKRYPLONEK, Lukasz, 72-200 Nowogard (PL)
(86) International application number: PCT/PL2015/000196
(87) International publication number: WO 2016/093717

(56) References cited:
- EP-A2- 2 223 595
- WO-A1-2009/097213
- DE-A1- 10 343 040
- DE-U1-202011 105 243
- DE-U1-202011 105 519
- GB-A- 2 385 506
- US-A- 5 291 856
- US-A1- 2012 211 255

## Description

The present invention relates to a protecting device for an elongated flexible member and an elongated flexible member with a protecting device, which prevent jawed vertebrates (Gnathostomata) from biting or chewing on the elongated flexible member, such as an electrical cable of an extension cord or a leash that is used when walking animals, in particular dogs, and that is suitable for training animals and eliminating their undesired behaviors.

Leashes are basic accessories for domestic animals, in particular for dogs, which facilitate safe leading of an animal during walks or trainings. A lot of dogs, when kept on the leash, display undesired behaviors related to biting and chewing on the leash, which may cause the leash to become damaged quickly, leading to dangerous situations for people and animals in case the compromised leash breaks. The problem of leash chewing mostly relates to two groups of dogs. The first group comprises young dogs (puppies).. In case of young dogs biting and chewing on the leash might have two reasons. The first reason might be the need to bite or chew due to teething. The second reason might be the fact that a young dog is not used to walking with a restraining device and, driven by an instinctive urge for tearing, wants to play and tussle with its guide. The second group comprises adult dogs, which have no experience of being walked on a leash. In that case biting and chewing might also result from the urge for tearing and playing. With adult dogs, however, biting on the leash might act as a substitutive stress reliever. For adopted dogs, dogs in shelters, dogs with deprivation syndrome, or hyperactive and overreacting dogs, biting and chewing on the leash may be a way to relieve the pressure that accompanies exposure to the world full of stimuli, which such dogs cannot respond to correctly. As the leash is usually located near the animal's mouth and hangs loosely, the animal is tempted to bite and chew on it and as a result it becomes the first object of interest and of undesired activity. Also, in a situation when the dog's instinctive urge for exploration is not satisfied, the dog may replace it with a compulsion for other instinctive behaviors, such as chewing or tearing. Chewing is one of the most common forms of activity for dogs and therefore the problem of biting and chewing on a leash is a very common behavioral problem.

Documents DE202011105519U1, DE10343040A1, EP2223595A2, US2012/211255A1, WO2009/097213A1, DE202011105243U1, US5291856A and GB2385506A disclose elongated flexible members.

The problem of chewing and biting on a leash may be currently solved with appropriate training. The choice of a particular training method depends mainly on the reason, i.e. the motivation for biting and/or chewing, also referred to as a releasing stimulus. If the reason for biting and/or chewing lies in the dog's reactivity (inadequate reaction to external stimulating agents - very often accompanied by high excitement and aggressive behaviors), gradual desensitization, counter-conditioning and relaxation methods are introduced. In cases when the view of another dog, human or any other stressful element of the environment perceived by senses (including smell, e.g. of fingernail polish or the touch of unfamiliar ground on which the dog walks) creates tension and causes the dog to bite on the leash, the training is focused on changing the association of the stimulus that causes tension from a negative one to a positive one. However, the training process lasts very long and its effectiveness is largely determined by the age and breed of the dog and most importantly by the skills of the dog's leader or trainer. In addition, the need to involve a highly qualified specialist makes the process expensive. If the dog bites or chews on the leash in order to control the behavior of its leader, for example to interrupt the walk or to get a treat, the training uses ignoring/extinction or aversion methods. The aversion method comprises directly spraying a substance whose smell is unpleasant to the dog, pulling the leash powerfully or using electrocution. Aversion methods involve a very big risk that the negative stimulus (e.g. electrocution) will become associated with an object other than intended. If at the moment of electrocution a child is close to the dog, the dog is very likely to feel fear of the child and display aggressive behavior in order to avoid contact with the child. There is also some risk that the dog will feel fear of the leash itself or of the leader/trainer. It should be noted that the dog's training may take various forms, be very time-consuming and require relatively extensive knowledge and commitment.

US 20110180015 A1 discloses a chew-proof animal leash and collar. This disclosure describes a device with fasteners that allow to shorten the leash if such need occurs. Resistance to chewing is achieved by means of a wire rope, which may have a breaking strength of 900 pounds. The above-mentioned disclosure also describes a collar which has a body portion comprising a metal chain that engages the leash. The metal chain protects the leash against breaking and discourages the animal from undesired chewing or biting on the leash. The metal chain, due to its design, causes the portion of the leash and the collar that comprises the chain to be of considerable weight and as a result to hang loosely form the animal's neck. Therefore, the chain may become uncomfortable for the walked animals, in particular for young and small dogs. In addition the chain has a tendency to become entangled. The weight of the leash may cause discomfort to the dog, whose anatomy is not adjusted to carrying heavy objects on its neck. As a result, the animal may not only become uninterested in walking but also develop health problems related to its bone structure.

A German patent document DE 3939981 C1 discloses a dog lead, which is made of woven of synthetic fibers, and has a weave with a core and is provided with a collar or a device for attaching the collar. The said lead is at least partially impregnated with a substance that effectively deters or repels biting and chewing and as a result helps to discourage the animal from undesired behaviors. Such substance may be for example onion concentrate mixed with powdered pepper.

On the other hand, US5551380A discloses a dog leash used to teach a dog to behave in the house and outside. In case the dog has a tendency for biting and chewing on the leash, the leash may be impregnated with a substance like Bitter Apple™. For more problematic cases there is also a recommendation to add the said Bitter Apple™ to red pepper juice mixed with garlic, which will definitely discourage the dog from undertaking undesired activity. It should be mentioned here that garlic (as well as onion) is a harmful product for dogs and may pose a threat to their health.

A dog-dedicated leash of a design that prevents the dogs from biting on the leash is available commercially. The Anti-Bite Leash from Patento Pet®, USA, is made of water-proof nylon and is impregnated with chili extract, which blocks the dog's biting and chewing reflex. The above mentioned solutions that are based on impregnating the leash with various types of substances may prove ineffective in some cases, such as for example in case of sensory disorders or in case of high reactivity level, which causes leash biting to become a stereotypy. In such cases the animal may break the leash and get out of control. In case the dog is allergic to any ingredient of the repelling substance, using such substances may prove harmful to the dog. What is more, such solution is based on the so-called negative reinforcement and is related to aversion methods, potentially leading to the aforementioned problems - fear and aggressive behaviors. In addition, such method of solving the dog's behavioral problems may be judged unethical, as it causes suffering to animals.

US 20100126430 A1 discloses a protecting device for a leash, which is designed to protect the leash against damage caused by intensive biting and chewing and at the same time not to cause any harm to the animal. This goal is achieved by using a protecting device in the form of a planar element, which can be rolled into a cylindrical shape (tube) and which is provided with an irregular outer surface. The protecting device is made of flexible material. Irregular outer surface in the form of dome shaped projections is designed to encourage the animal to bite on this element and not on other elements of the leash. The protecting device turns the animal's attention away from the leash and towards the element that is dedicated to be chewed. This action is considered a protection against damaging the leash, but does not discourage the dog from undesired behavior consisting in biting, chewing and pulling on the leash and in fact it promotes negative behavior.

The above described situations are related to the problem of biting and chewing on the leash by the dog. Such behavior may have various reasons, but in all cases appropriate strength and protection must be provided to the leash in order to prevent the animal from biting through the leash and breaking loose from the restraint device. The problem of chewing and biting on the leash may also have other negative consequences. Small pets, such as rabbits and chinchillas, are also a common problem, as they bite through elongated flexible elements, such as electrical cables of electrical cords. Such behaviors of pets are understood as a means to relieve stress that is created when an animal is kept in confinement such as a cage or when an animal is not given the chance to fulfill its natural need of exploration. Pets that bite through electrical cables not only cause damage to such elements as electrical cords, refrigerators or electrical wiring, but also put themselves in danger of electrocution or even of death. A separate and quite common problem is posed by small rodents, such as martens and rats, that bite through electrical wires and hydraulic or pneumatic conduits in motor vehicles. Such activity of animals may lead to tragic consequences, as the damage may be caused to critical elements of the vehicle's equipment, for example to high-voltage wires, high-pressure conduits or even to brake hoses.

The main aim of the present invention is to provide a protecting device for an elongated flexible member and an elongated flexible member with a protecting device that would protect the elongated flexible member from being bitten through by a jawed vertebrate and that would simultaneously discourage the jawed vertebrate from chewing on the elongated flexible member, in particular on the leash. It is desired not to use aversion methods or substances that might be harmful to the animal. It is also desired for the protecting device to be lightweight, to have simple design, to be easy to manufacture and to have a universal structure that fits a wide range of elongated flexible members. Another desired characteristic is that the elongated flexible member provided with such a protecting device does not have a tendency to become entangled. The present invention unexpectedly solves the above described technical problems.

The first object of the invention is a protecting device for an elongated flexible member, the protecting device acting as a protection against biting and chewing on the elongated flexible member and being placed on at least a part of the elongated flexible member, characterized in that the protecting device is a spring made of wire or an array of rings arranged coaxially on a connecting element, the pitch of the spring or the distance between adjacent rings being in the range of 0.05 cm to 5 cm. In one embodiment of the present invention, the connecting element comprises a cylindrical sleeve with a ring fixed coaxially to the sleeve's outside surface. In another embodiment of the present invention, the length of the connecting element is between 0.05 cm and 5 cm. In yet another embodiment of the present invention, the ring is made of wire or of a planar washer, wherein the diameter of the wire or the thickness of the planar washer or the diameter of the spring wire is in the range between 0.02 cm and 0.5 cm. Advantageously, the spring wire or the ring is made of metal, metal alloy or other materials, whose hardness corresponds to hardness values between HRG and HRA in Rockwell scale. Also advantageously, the external diameter of the spring or of the ring ranges between 0.5 cm and 7 cm. In another advantageous embodiment of the present invention, the length of the protecting device will range between 5 cm and 200 cm. In yet another embodiment of the present invention, the external diameter of the spring or of the rings varies periodically along the length of the protecting device, with at least two areas of maximum outside diameter and at least two areas of minimum outside diameter. In another embodiment of the present invention, the distance between the areas of maximum outside diameter and/or the areas of minimum outside diameter ranges between 2 cm and 10 cm. Advantageously, the maximum outside diameter to the minimum outside diameter ratio ranges between 1 and 10. More advantageously, the parallel projection of the spring's single coil or of a single ring is a geometric figure of a substantially cylindrical, elliptical or polygonal shape. In another embodiment of the present invention the elongated flexible member is a leash, an electrical cord, a hydraulic The first object of the invention is a protecting device for an elongated flexible member, the protecting device acting as a protection against biting and chewing caused by an animal on the elongated flexible member and being placed on at least a part of the elongated flexible member, wherein the protecting device is a spring made of wire or an array of rings arranged coaxially on a connecting element, the pitch of the spring or the distance between adjacent rings being in the range of 0.05 cm to 5 cm, characterized in that the external diameter of the spring or of the rings varies periodically along the total length of the protecting device, with at least two areas having a maximum outside diameter and at least two areas having a minimum outside diameter, forming at least two periods of variation of the external diameter of the spring or of the rings, wherein the maximum outside diameter to the minimum outside diameter ratio and the diameter variation period are suitable for the spring or the array of rings at the maximum outside diameter area to push against the animal's tongue and palate when the animal's teeth are biting on both adjacent minimum outside diameter areas. In one embodiment of the present invention, the connecting element comprises a cylindrical sleeve with a ring fixed coaxially to the sleeve's outside surface. In another embodiment of the present invention, the length of the connecting element is between 0.05 cm and 5 cm. In yet another embodiment of the present invention, the ring is made of wire or of a planar washer, wherein the diameter of the wire or the thickness of the planar washer or the diameter of the spring wire is in the range between 0.02 cm and 0.5 cm. Advantageously, the spring wire or the ring is made of metal, metal alloy or other materials, whose hardness corresponds to hardness values between HRG and HRA in Rockwell scale. Also advantageously, the external diameter of the spring or of the ring ranges between 0.5 cm and 7 cm. In another advantageous embodiment of the present invention, the length of the protecting device will range between 5 cm and 200 cm. In another embodiment of the present invention, the distance between the areas of maximum outside diameter and/or the areas of minimum outside diameter ranges between 2 cm and 10 cm. Advantageously, the maximum outside diameter to the minimum outside diameter ratio ranges between 1 and 10. More advantageously, the parallel projection of the spring's single coil or of a single ring is a geometric figure of a substantially cylindrical, elliptical or polygonal shape.

The second object of the present invention is an elongated flexible member with a protecting device acting as protection against biting and chewing by an animal, wherein the protecting device is placed on at least part of the elongated flexible member, characterized in that the protecting device is a protecting device defined in the first object of the present invention. In one embodiment of the present invention, the ends of the protecting device are fastened to the elongated flexible member with clamps on an elastic pad or with metal clamps or are sewn into or woven into the material of the elongated flexible member. In another embodiment of the present invention the elongated flexible member is a leash, an electrical cord, a hydraulic conduit, power supply cable, a network cable, a high voltage wire, a headphone cable, or an electrical charger cable. Examples of the leash with a protecting device for the elongated flexible member according to the first object of the present invention include, but are not limited to, leashes selected from a group comprising: a fixed length leash, an automatic retractable leash. In case of a retractable leash, the protecting device is placed in the area between the element that is secured to the collar (for example a clip hook) and the element that blocks further retraction of the leash.

The disclosed protecting device for an elongated flexible member, having a structure made of metal wire of small diameter, is a lightweight and simple design that is cheap to manufacture. The range of the minimal diameters of the protecting device for the elongated flexible member is selected in a way to ensure that the protecting device is universal and fits various elongated flexible members, for example leashes for dogs, cats, small rodents, electrical cables of electrical cords, network cables, printer cables, power supply cables for household appliances, or even electrical cables of smaller diameter, such as electrical charger cables, for example for cellular phones or headphones. An appropriately selected spring pitch and/or distance between adjacent rings of the protecting device makes the animal experience an unpleasant feeling when biting or chewing, and at the same time does not trap the animal's mouth, thus preventing the experience of acute pain and fear. Periodical variation of the protecting device's outside diameter ensures additional protection to the elongated flexible member, as the areas having the greatest outside diameter press against either the palate or the gums of the animal. The design of the protecting device for the elongated flexible member and of clamping elements is safe for the animal, does not inflict injuries and relies on evoking unpleasant feelings rather than causing pain and fear. In addition, the protecting device does not rely on the use of any impregnating substances, which further improves its safety. Moreover, using an elongated flexible member with the protecting device unexpectedly allowed to obtain a feature that consists in a significantly reduced tendency of the electrical cables to become entangled, which may be particularly applicable to electrical chargers for hand-held electronic equipment, such as cellular phones or wire headphones. In addition, the leash with a protecting device according to the present invention showed shock-absorbing features, as it absorbed the shocks caused by an animal pulling on the leash.

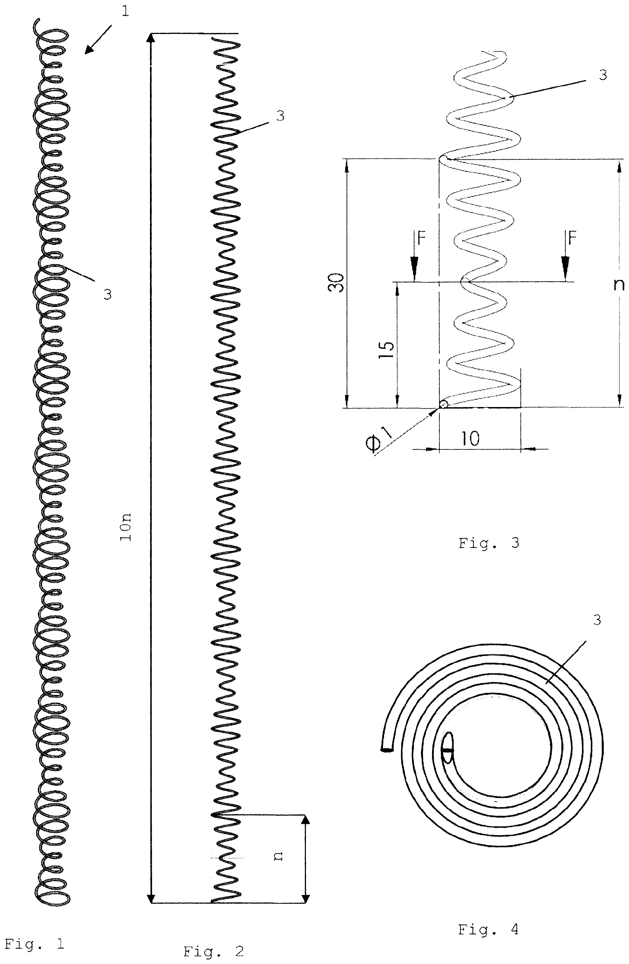

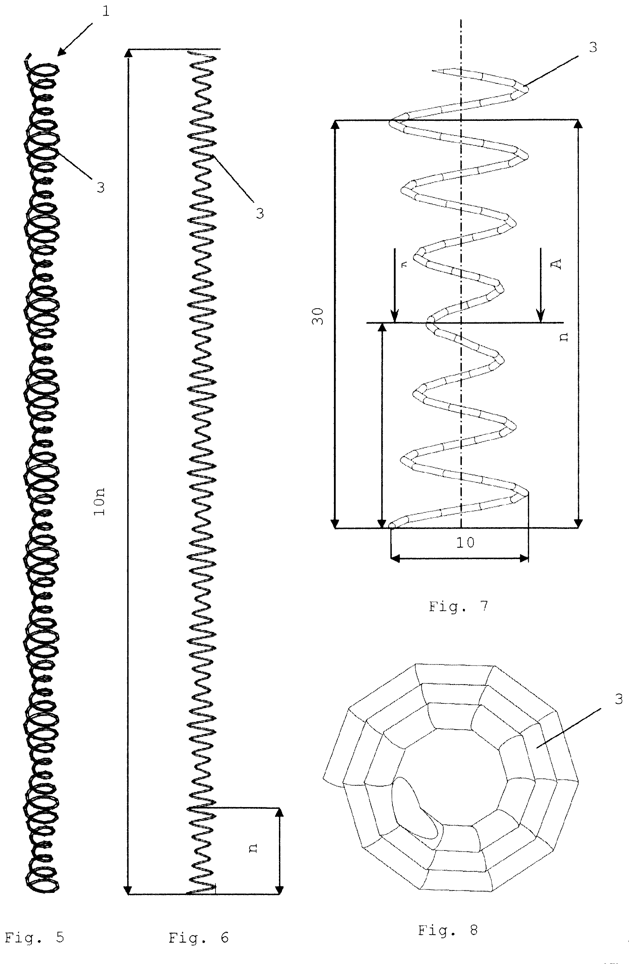

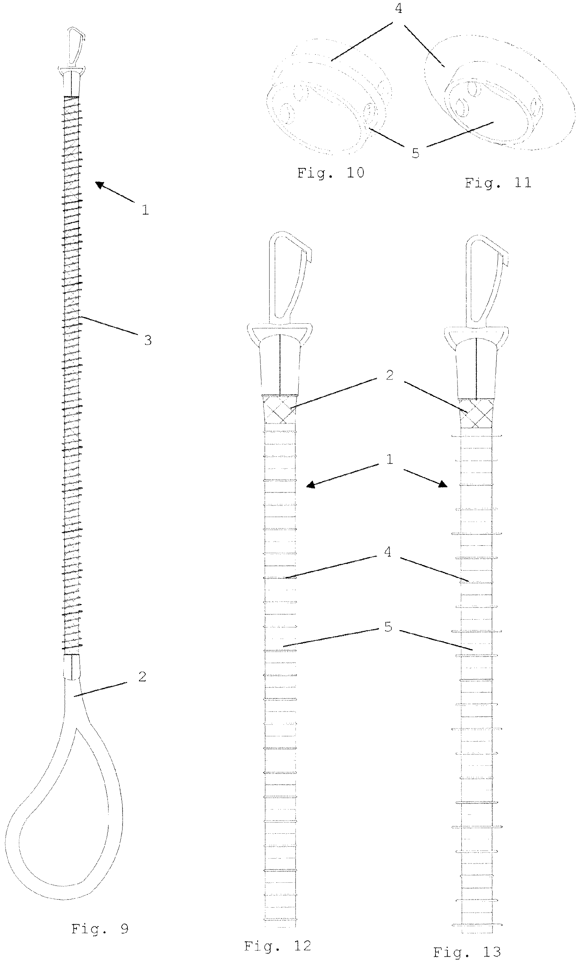

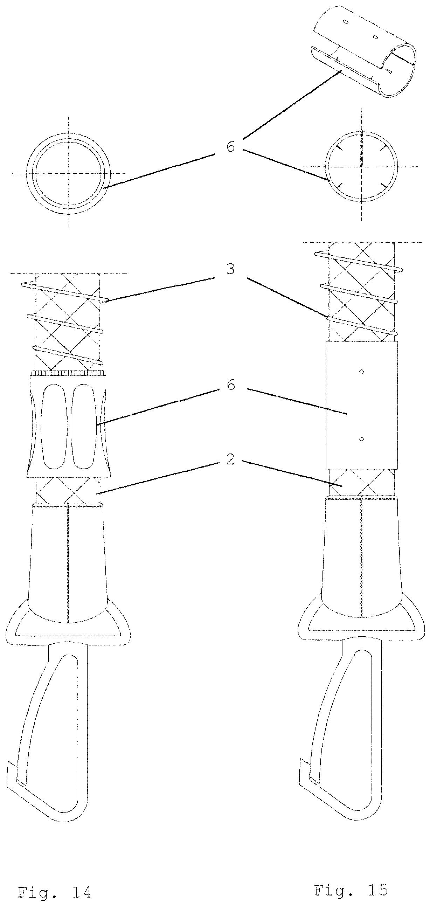

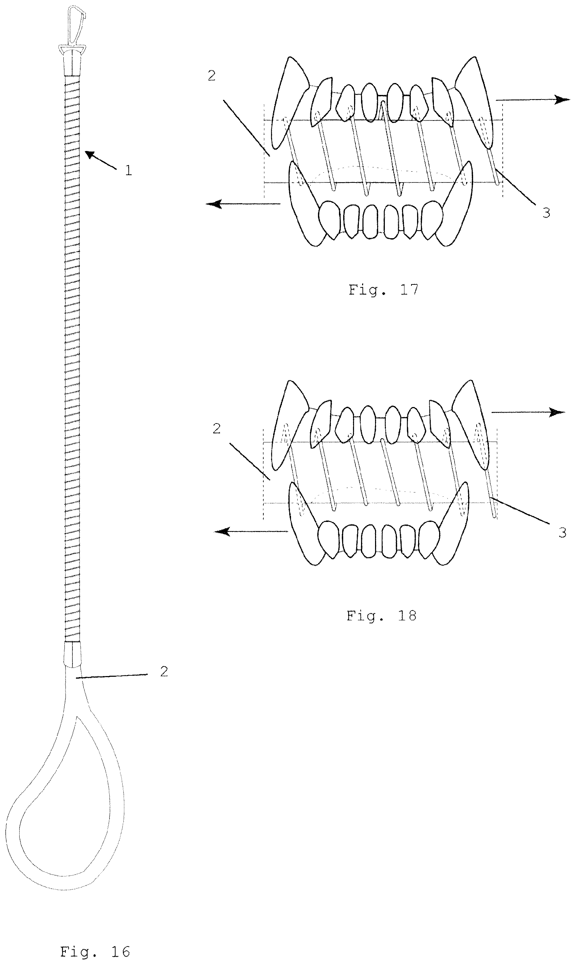

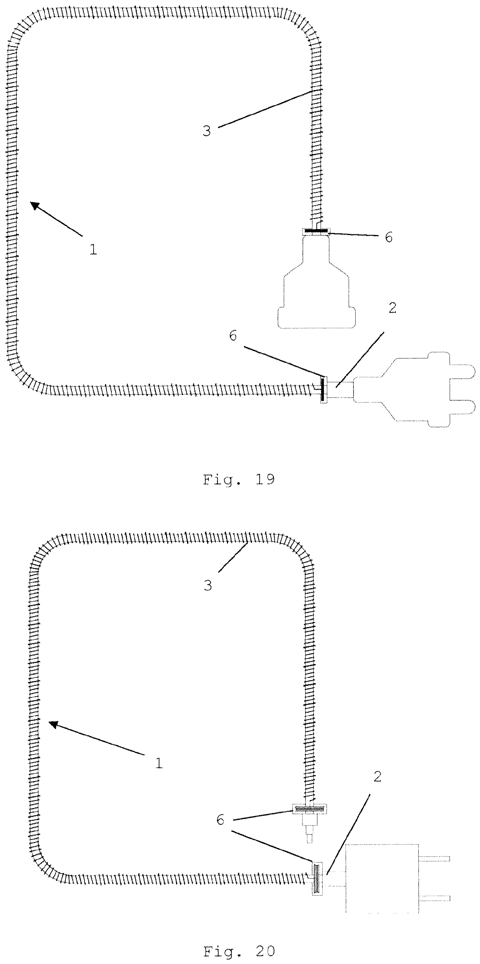

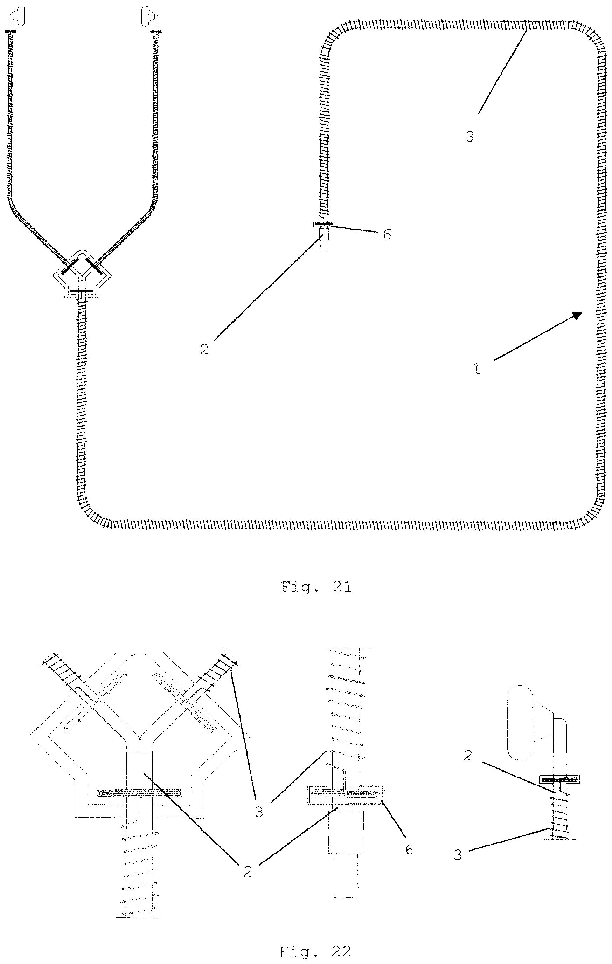

Exemplary embodiments of the present invention are shown in the drawing, in which Fig. 1 is an isometric view of a leash protecting device in accordance with the first exemplary embodiment of the present invention, Fig. 2 is a side view of the leash protecting device of Fig. 1, Fig. 3 is an enlarged fragmentary side view of the leash protecting device of Fig. 1, Fig. 4 is a parallel projection of a single segment of the protecting device of Fig. 1, Fig. 5 is an isometric view of a leash protecting device in accordance with the second exemplary embodiment of the present invention, Fig. 6 is a side view of the leash protecting device of Fig. 5, Fig. 7 is an enlarged fragmentary side view of the leash protecting device of Fig. 5, Fig. 8 is a parallel projection of a single segment of the protecting device of Fig. 5, Fig. 9 is a view of the leash with the protecting device of Fig. 1 - 4, Fig. 10 is a view of the first exemplary embodiment of a single ring with a connecting element, Fig. 11 is a view of the second exemplary embodiment of a single ring with a connecting element, Fig. 12 is a view of the leash with a protecting device not according to the invention in the form of rings on the connecting elements, the rings having uniform outside diameter, Fig. 13 is a view of the leash with a protecting device in the form of rings on the connecting elements, the rings having variable outside diameter, Fig. 14 is a view of a clamp that fastens the protecting device to the leash, Fig. 15 is a view of another type of clamp that fastens the protecting device to the leash, Fig. 16 is a view of the leash with a protecting device not according to the invention in the form of a spring having uniform outside diameter of coils, Fig. 17 is a schematic representation of the dog's jaws clenched on the protecting device in the first position, Fig. 18 is a schematic representation of the dog's jaws clenched on the protecting device in the second position, Fig. 19 is a view of an electrical cord with a protecting device in the form of a spring having a variable outside diameter, Fig. 20 is a view of an electrical charger with a protecting device in the form of a spring having a variable outside diameter, Fig. 21 is a view of wire headphones with protecting devices in the form of a spring having a variable outside diameter, Fig. 22 is an enlarged view of the areas where the protecting devices are fastened to headphone wires of Fig. 21. The figures show exemplary embodiments that do not limit or define the scope of the invention and relate only to the protecting device and to the protecting device fastened to a leash and to other elongated flexible members. Obviously, the invention is not limited to the above shown embodiments and may be applied to other elements and devices that restrain animals, such as dog sledding harness ropes, still showing its advantages and solving the above described technical problem. Furthermore, the present invention may be used whenever there is a risk that a jawed vertebrate will bite through elongated flexible members, such as brake hoses in motor vehicles.

### Example 1

Figures 1 - 4 show the first exemplary embodiment of a protecting device 1 for an elongated flexible member 2 in accordance with the present invention, wherein the elongated flexible member 2 was a leash. The protecting device 1 was made of stainless steel wire having a diameter of 1 mm. Fig. 1 is an isometric view of a complete leash protecting device 1 in the form of a spring 3. Fig. 2 is a side view of the complete leash protecting device 1. The protecting device 1 was 60 cm in length. The protecting device 1 in accordance with the first embodiment had a periodically variable outside diameter along its length. Minimum outside diameter of the protecting device 1 was 10 mm and maximum outside diameter of the protecting device 1 was 20 mm. The diameter variation period is designated "n" in Figures 2 and 3 and was 60 mm in length. This means that the protecting device's coil having the minimum outside diameter was located every 60 mm along the protecting device's length. Similarly, the protecting device's coil having the maximum outside diameter was also located every 60 mm along the protecting device's length. There were 10 diameter variation periods along the protecting device's total length. The spring 3 of the leash protecting device 1 had a pitch of 5 mm. Figure 4 shows a parallel projection of a single segment (single period) of the protecting device 1. The protecting device 1 had a substantially circular section, and the device's single segment formed a characteristic structure of Archimedean spiral. The here disclosed design of a leash protecting device 1 matches leashes having a diameter of 10 mm and made of various materials, for example leather, a variety of plastics, including polypropylene, polyester, nylon and materials of plant origin, such as linen, jute, cotton or hemp. After it is placed on the leash, the protecting device 1 is fastened to the leash's opposite ends using stainless steel clamps 6 with a flexible rubber pad, as shown in Figure 14, or with a steel pad equipped with stabilizing needles located on the inside surface, the pad being clamped or pressed on the leash's material, alternatively fastened with fastening pins, as shown in Fig. 15. Alternatively, the protecting device 1 may be wrapped with a textile material and sewn into the leash's material with strong threads.

Being made of a steel wire 1 mm in diameter, the protecting device 1 is lightweight and therefore does not put a strain on the animal's bone structure and does not become entangled at the animal's paws/legs. The protecting device's structure makes it easy to manufacture, which is an economic advantage. Fastening clamps 6 ensure that the protecting device is firmly secured to the leash 2 and does not change its position when used. The present protecting device 1 is intended for dogs, whose jaw width is within the range from 5 cm to 7 cm, thus including for example the following breeds: Golden Retriever, Labrador Retriever, Bernese Mountain Dog.

The present leash protecting device 1 was tested with hyperactive dogs, which show a tendency for biting or chewing on the leash 2 during walks and play. The dogs that were walked on a regular leash 2 (without any devices that would restrain the impulse to bite and chew on the leash) bit, chewed and pulled on the leash 2, thus causing anxiety to dog owners and to people who passed by those dogs, and also increasing the risk that the leash 2 breaks and the dog gets out of control. Dogs which pull on the leash very often consider such action a form of play with their owners. But such play might be dangerous and if the owner is thrown off balance and falls, he/she might suffer from injuries, for example from bone fractures which are especially probable with older people. Placing the protecting device 1 in accordance with the first embodiment of the present invention on the leash 2 resulted in dogs losing any interest in biting or chewing on the leash 2 after no more than a dozen or two attempts to bite or chew on it. This effect was caused by the material that the protecting device 1 was made of - a metal protecting device 1 evokes unpleasant feeling in the dog's mouth - and by the shape of the protecting device 1 - inclined shape formed by subsequent coils forced the jaws to move against each other in horizontal plane thus making it impossible for the animal to bite the leash 2. Figures 17 and 18 are a schematic view of two positions in which the dog's jaws are clenched on the leash 2 with the protecting device 1. Specific, helical structure of the protecting device causes the jaws of the biting animal to move in opposite directions, for example the upper jaw moves to the left and the lower jaw moves to the right. The structure of the dog's mandible, and more specifically of the dog's cranial joints makes movement in horizontal plane impossible, effecting in an unpleasant feeling that discouraged further attempts at biting. The arrows in the above mentioned figures indicate the jaw's direction of motion as forced by the teeth sliding on the protecting device 1. The effects is that the teeth cannot clench on the leash 2 and damage it, as they are blocked. Figure 17 shows the dog's jaws clenched on the leash 2 with the protecting device 1 in a position, in which the coil 3 having the maximum diameter is placed in the area corresponding to the dog's jaw axis of symmetry. In such situation the coil 3 having the maximum diameter reinforces the feeling of discomfort by pushing against the dog's tongue and the palate. Figure 18 shows the dog's jaws clenched on the leash 2 with the protecting device 1 in a position, in which the coil 3 having the minimum diameter is placed in the area corresponding to the dog's jaw axis of symmetry and the coils 3 having the maximum diameter are placed in the area where the teeth are located. In this position, when the jaws clench on the leash 2 with the protecting device 1, the wire coils 3 having the maximum diameter push against the dog's gums, reinforcing the feeling of discomfort caused by the protecting device 1. The variation period of the protecting device's outside diameter protected the leash 2 from being bitten in two ways, as it made it impossible for the dog to close its teeth on the material that the leash 3 was made of. It should be also mentioned that the here disclosed protecting device 1 did not cause any injuries or pain to the animal - only discomfort was caused due to the material and the structure of the protecting device 1.

The protecting device 1 proved effective in the light of two rules that govern behavioral learning model.
a) First, it is an aversive for dogs that persist in attempts to bite on the leash 2. According to the P+ rule, i.e. positive punishment, closing its jaws on the protecting device 1 makes the dog experience an unpleasant pressure against its gums and/or palate, depending on which element of the protecting device 1 the dog has grabbed in its teeth.
b) Second, it is a discouragement according to the R- rule, i.e. negative reinforcement. The anticipated instinctive pleasure derived from pulling does not occur, as the dog cannot hold the leash in its teeth, and especially cannot close its teeth on the material that it could pull on.

### Example 2

Figures 5 - 8 show the second exemplary embodiment of the protecting device 1 for an elongated flexible member 2 in accordance with the present invention, wherein the elongated flexible member 2 was a leash. The protecting device 1 was made of aluminum alloy wire having a diameter of 0.5 mm. Fig. 5 is an isometric view of a complete leash protecting device 1 in the form of a spring 3. Fig. 6 is a side view of the complete leash protecting device 1. The protecting device 1 was 30 cm in length. The protecting device 1 in accordance with the second embodiment had a periodically variable outside diameter along its length. Minimum outside diameter of the protecting device 1 was 5 mm and maximum outside diameter of the protecting device 1 was 10 mm. The diameter variation period is designated "n" in Figures 5 and 6 and was 30 mm in length. There were ten diameter variation periods along the protecting device's total length. The spring 3 of the leash protecting device 1 had a pitch of 5 mm. Figure 8 shows a parallel projection of a single segment (single period) of the protecting device 1. The protecting device 1 had a substantially polygonal (approximately decagonal) cross-section, and the device's single segment formed a structure resembling Archimedean spiral. The here disclosed design of a leash protecting device 1 matches leashes 2 having a diameter of 5 mm and made of various materials, for example leather, a variety of plastics, including polypropylene, polyester, nylon and materials of plant origin, such as linen, jute, cotton or hemp. After it is placed on the leash 2, the protecting device 1 is fastened to the leash's opposite ends using stainless steel clamps 6 with a flexible rubber pad, as shown in Figure 14, or with a steel pad equipped with stabilizing needles located on the inside surface, the pad being clamped or pressed on the leash's material, alternatively fastened with fastening pins, as shown in Fig. 15. Alternatively, the protecting device 1 may be wrapped with a textile material and sewn into the leash's material with strong threads.

The present protecting device 1 is intended for dogs, whose jaw width is within the range from 2 cm to 4 cm, thus including for example the following breeds: Australian Shepherd, Siberian Husky or Border Colie.

The protecting device 1 was tested similarly to the tests described in Example 1. The protecting device 1 worked as expected in all situations, effectively discouraging the walked dogs from biting on the leash 2.

### Example 3

Figure 9 shows a standard leash 2 made of nylon material, having a circular cross-section, with the protecting device 1 of Example 1 placed thereon. The protecting device 1 was secured to the opposite ends using a stainless steel clamp 6 with a flexible rubber pad, as shown in Figure 14. Such clamps 6 ensured that the protecting device 1 was situated in the right position on the leash 2, while the shape of the clamps 6 protected the animal from being injured by the protecting device end portions. The protecting device 1 was placed along the leash's total length. The leash 2 was tested similarly to the tests described in previous examples and the results were also analogous. In each case the protecting device 1 in accordance with the present invention protected the leash 2 from damage, thus allowing to confidently and safely lead the animal during training and walks. Unexpectedly, the protecting device's helical structure gave the leash 2 with the protecting device 1 a shock-absorbing feature, as the leash 2 absorbed the shocks caused by the dog pulling on the leash 2. It is advantageous for both the trainer and the owner of the animal, as well as for the walked animal itself, increasing the comfort of using such leash 2 with a protecting device 1.

### Example 4

Figure 10 shows a single ring 4 of the leash protecting device 1 in accordance with another embodiment of the present invention. The ring 4 is placed on the outside surface of the connecting element 5, the connecting element 5 being a cylindrical sleeve. The ring 4 is fixed coaxially to the cylindrical sleeve 5 using methods known in the art that ensure a strong and inseparable connection, for example using heating, gluing, welding, co-casting, interference fit or bolt connections etc. The ring 4 may be also fixed to the connecting element 5 using radially positioned brackets. Figure 11 shows a single ring 4 of the leash protecting device 1, the ring 4 having a greater diameter that the one showed in Figure 10. The ring 4 is made of stainless steel in the form of a planar washer and its thickness is 0.5 mm. Alternatively, the ring 4 may be a wire 0.5 mm in diameter, fixed to the connecting element 5, using for example brackets. Both the ring 4 and the cylindrical sleeve are made of stainless steel. Other suitable materials include materials whose hardness corresponds to hardness values between HRG and HRA in Rockwell scale. Both the ring's and the cylindrical sleeve's cross-section is a circle. The ring's cross-section may also take other shapes, such as an ellipse or a polygon, for example a triangle, a square, a rectangle, a pentagon, an octagon etc. An array of rings 4 fixed to connecting elements 5 is placed on the leash 2 in close vicinity so that the distance between the adjacent rings 4 is 10 mm. Herein is also disclosed however not claimed, that the ring outside diameter may be uniform and equal to 25 mm, as shown in Fig. 12 (which not forms embodiment of the invention). The rings 4 have a variable diameter along the leash length. In such case ring 4 outside diameter would periodically vary with the ring's minimum outside diameter being 10 mm and the ring's maximum outside diameter being 30 mm and the period for minimum/maximum values being 50 mm. Each of the cylindrical sleeves 5 may be clamped or pressed on the leash's material, making it impossible for the sleeve 5 to move along the length of the leash 2. Construction of the protecting device 1 so that individual rings 4 are placed on the connecting device 5 in an adjacent manner along the length of the leash 2 makes the protecting device 1 flexible and allows it to freely bend and twist in any direction.

The protecting device 1 was tested similarly to the tests described in Example 1, on adult dogs of the following breeds: Golden Retriever, Labrador Retriever, Bernese Mountain Dog, Australian Shepherd, Siberian Husky and Border Colie. The protecting device worked as expected in all situations, effectively discouraging the walked dogs from biting on the leash.

### Example 5 - not according to the invention

Figure 16 shows a standard leash 2 made of leather, having a circular cross-section, with a protecting device 1 comprising a steel wire spring 3 having uniform coil diameter. The spring's pitch was 10 mm and its outside diameter was 20 mm. The protecting device 1 was made of steel wire having a diameter of 1 mm and was placed on a nylon leash, whose diameter was 10 mm. The protecting device 1 was secured to the opposite ends using a steel pad 6, as shown in Figure 15. Such pad 6 ensured that the protecting device 1 was situated in the right position on the leash 2, while the shape of the pad protected the animal from being injured by the protecting device end portions. The protecting device 1 was placed along the leash's total length. The leash 2 was tested similarly to the tests described in previous examples and the results were also analogous. In each case the protecting device 1 protected the leash 2 from damage, thus allowing to confidently and safely lead the animal during training and walks.

### Example 6

The protecting device 1 in accordance with one embodiment of the present invention was placed on an electrical cable 2 of an electrical extension cord, as shown in Fig. 19. In this case the protecting device 1 was a steel wire spring 3 with variable coil diameter, similar to the spring 3 showed in Example 1. The electrical cable 2 of the electrical extension cord was 8 mm in diameter, and thus the protecting device 1 for the electrical cable 2 had the following geometrical parameters: wire diameter 1 mm, protecting device's minimum diameter 8 mm (outside diameter), protecting device's maximum diameter 13 mm (outside diameter), spring pitch 4 mm. The length of the protecting device 1 was so adjusted to the length of the electrical cable 2 that the protecting device 1 extended the whole length of the electrical cable 2, leaving no unprotected sections. At the ends of the electrical cable 2, in the portions where the plugs are located, the protecting device 1 was fastened to the electrical extension cord with clamping sleeves 6, the clamping sleeves being annular structures with hollow inner area, so that the clamping sleeve 6 was firmly fastened on the electrical cable 2, making it impossible for the clamping sleeve 6 to move along the electrical cable 2. A portion of the protecting device's spring 3 is placed inside the clamping sleeves 6, with several of the spring's end coils 3 having a significantly enlarged outside diameter so that when placed inside the clapming sleeve 6, they allow for a firm connection between the protecting device 1 and the cable 2, thus preventing the protecting device 1 from disconnection and possible movement along the cable 2. An electrical extension cord of such configuration was protected from being bitten through by rodents such as a house mouse or a hamster, as well as by young dogs or cats, whose jaw width is within the range of the protecting device's geometrical parameters. In addition, the protecting device 1 in accordance with the present invention unexpectedly allowed to eliminate the tendency of the electrical cable 2 to become entangled. This effect results from the fact that the protecting device 1 comprising a metal wire spring increases the system's rigidity and thus prevents it from becoming naturally wound and entangled.

### Example 7

Similarly to Example 6, the protecting device 1 in accordance with one of the embodiments of the present invention was placed on an electrical cable 2 of an electrical charger, as shown in Fig. 20. As the electrical cable 2 of the electrical charger has a smaller diameter (3 mm) than the electrical extension cord, the protecting device's geometrical parameters were changed and in this embodiment were as follows: wire diameter is 0.5 mm, the protecting device's minimum diameter is 3 mm, the protecting device's maximum diameter is 6 mm, spring pitch is 2 mm. Similarly, the protecting device's length was equal to the length of the electrical cable 2. Similarly, the protecting device 1 was fastened to the electrical cable 2 using clamping sleeves 6 adjusted to fit a different diameter of the electrical cable 2. In this case, the parameters of the protecting device 1 allowed to protect the electrical cable 2 from being bitten through by rodents, such as a mouse or a hamster and by young, small dogs and cats. As was observed in Example 6, by using the protecting device 1 in accordance with the present invention an additional effect was achieved that consisted in the elimination of the tendency of the electrical cable 2 to become entangled, the said tendency being a significant problem that reduces user comfort in case of electrical chargers, especially cellular phone chargers.

### Example 8

In yet another embodiment of the present invention the protecting device 1 for an elongated flexible member was placed on wire headphones, as shown in Figs. 21 and 22. In this embodiment the wire headphones were standard in-ear headphones with a standard mini-jack plug. The wire headphones have three separate portions. The first portion is a section of the cable 2 between the earphones plug and the earphones Y-type junction. The second portion and the third portion are sections of the cable 2 between the Y-type junction and the earbuds. The diameter of the electrical cable's first portion is 2 mm, while the diameters of the cable's second and third portion are 1 mm. In this specific case, to protect all the three portions of the earphone cable 2 from being bitten through it was necessary to use two different types of protecting devices 1, one for the first portion and another one for the second and third portions. In the first portion a protecting device 1 with variable outside diameter was used, similar to the device 1 shown in Example 1. Due to a different diameter of the electrical cable's first portion, the protecting device 1 had the following geometrical parameters: wire diameter 0.4 mm, protecting device's minimum diameter 2 mm, protecting device's maximum diameter 4 mm, spring pitch 1.5 mm. The first portion's protecting device 1 was fastened to the electrical cable 2 near the mini-jack plug using a clamping sleeve 6 similar to the clamping sleeve 6 from Example 7 and Example 8, with geometry adjusted to different geometrical parameters of the electrical cable 2 and the protecting device 1. At the second end of the cable's first portion, near the headphone's Y-type junction, the protecting device 1 was fastened to a Y-connector element, which was tightly fit on the Y-type junction. The design of the Y-connector element is similar to the design of the clamping sleeve 6 and also allows several of the protecting device's coils 3 having increased outside diameter to be placed inside the Y-connector member, which establishes a firm connection between the protecting device 1 and a portion of the headphone cable 2, thus preventing the protecting device 1 from movement along the cable. Due to the fact that the electrical cable's second portion and third portion have a smaller diameter equal to 1 mm, the protecting devices 1 for the second portion and the third portion must have different geometrical parameters, which are as follows: wire diameter 0.2 mm, the protecting device's minimum diameter 1 mm, the protecting device's maximum diameter 2 mm, spring pitch 1 mm. In a similar fashion, the protecting devices 1 were fastened near the earbuds using similar clamping sleeves 6. At the second ends, the protecting devices 1 were fastened to the electrical cables 2 using the Y-connector element. This way the wire headphones with protecting devices 1 in accordance with the present invention were protected from being bitten through by a mouse and other small rodents, as well as by small, young cats. In addition, as was observed in other examples, by using the protecting device 1 in accordance with the present invention, a tangle-free electrical cable was obtained, which solved a significant problem that reduces user comfort in case of wire headphones.

## Claims

1. A protecting device (1) for an elongated flexible member (2), the protecting device (1) acting as a protection against biting and chewing caused by an animal on the elongated flexible member (2) and being placed on at least a part of the elongated flexible member (2), wherein the protecting device (2) is a spring (3) made of wire or an array of rings (4) arranged coaxially on a connecting element (5), the pitch of the spring or the distance between adjacent rings being in the range of 0.05 cm to 5 cm, **characterized in that** the external diameter of the spring (3) or of the rings (4) varies periodically along the total length of the protecting device (1), with at least two areas having a maximum outside diameter and at least two areas having a minimum outside diameter, forming at least two periods (n) of variation of the external diameter of the spring (3) or of the rings (4), wherein the maximum outside diameter to the minimum outside diameter ratio and the diameter variation period (n) are suitable for the spring (3) or the array of rings (4) at the maximum outside diameter area to push against the animal's tongue and palate when the animal's teeth are biting on both adjacent minimum outside diameter areas.

2. The protecting device (1) for an elongated flexible member (2) according to claim 1, **characterized in that** the connecting element (5) is a cylindrical sleeve having a ring (4) fastened to the sleeve's outside surface, coaxial with the said cylindrical sleeve.

3. The protecting device (1) for an elongated flexible member (2) according to claim 2, **characterized in that** the connecting element (5) has a length within the range between 0.05 cm to 5 cm.

4. The protecting device (1) for an elongated flexible member (2) according to claim 2 or 3, **characterized in that** the ring (4) is made of wire or of a planar washer, wherein the diameter of the wire or the thickness of the planar washer or the diameter of the spring wire is in the range between 0.02 cm and 0.5 cm.

5. The protecting device (1) for an elongated flexible member (2) according to any of the claims from 1 to 4, **characterized in that** the spring's wire or the ring (4) is made of metal, metal alloy or other materials, whose hardness corresponds to hardness values between HRG and HRA in Rockwell scale.

6. The protecting device (1) for an elongated flexible member (2) according to any of the claims from 1 to 5, **characterized in that** the external diameter of the spring (3) or of the ring (4) ranges between 0.5 cm and 7 cm.

7. The protecting device (1) for an elongated flexible member (2) according to any of the claims from 1 to 6, **characterized in that** the protecting device (1) has a length within the range between 5 cm and 200 cm.

8. The protecting device (1) for an elongated flexible member (2) according to any of the claims from 1 to 7, **characterized in that** the distance between the areas having maximum outside diameter and/or the areas having minimum outside diameter ranges between 2 cm and 10 cm.

9. The protecting device (1) for an elongated flexible member (2) according to any of the claims from 1 to 8, **characterized in that** the maximum outside diameter to the minimum outside diameter ratio ranges between 1 and 10.

10. The protecting device (1) for an elongated flexible member (2) according to any of the claims from 1 to 9, **characterized in that** the parallel projection of the spring's single coil or of a single ring (4) is a geometric figure of a substantially cylindrical, elliptical or polygonal shape.

11. An elongated flexible member (2) with a protecting device (1) acting as protection against biting and chewing by an animal, wherein the protecting device (1) is placed on at least part of the elongated flexible member (2), **characterized in that** the protecting device (1) is a protecting device (1) as defined in any of the claims from 1 to 10.

12. The elongated flexible member (2) with a protecting device (1) according to claim 11, **characterized in that** the ends of the protecting device (1) are fastened to the elongated flexible member (2) with clamps (6) on an elastic pad or with metal clamps or are sewn in or woven into the material of the elongated flexible member (2).

13. The elongated flexible member (2) with a protecting device (1) according to claim 11 or claim 12, **characterized in that** the elongated flexible member (2) is a leash, an electrical cord, a hydraulic conduit, a power supply cable, a network cable, a high voltage wire, a headphone cable, or an electrical charger cable.

## Patentansprüche

1. Schutzgegenstand (1) für ein längliches flexibles Objekt (2), wobei der Schutzgegenstand (1) als Schutz vor Beißen und Kauen verursacht durch ein Tier auf dem länglichen flexiblen Objekt (2) dient und auf zumindest einem Teil des länglichen flexiblen Objekts (2) platziert ist, wobei der Schutzgegenstand (2) eine Feder (3) ist, die aus Draht oder einer Reihe an Ringen (4) hergestellt ist, die koaxial an einem Verbindungselement (5) angeordnet ist, wobei die Steigung der Feder oder der Abstand zwischen benachbarten Ringen im Bereich von 0,05 cm bis 5 cm ist, **dadurch gekennzeichnet, dass** der Außendurchmesser der Feder (3) oder der Ringe (4) periodisch entlang der Gesamtlänge des Schutzgegenstands (1) variiert, wobei zumindest zwei Bereiche einen maximalen Außendurchmesser aufweisen und zumindest zwei Bereiche einen minimalen Außendurchmesser aufweisen, wobei zumindest zwei Perioden (n) an Variation des Außendurchmessers der Feder (3) oder der Ringe (4) gebildet werden, wobei das Verhältnis von dem maximalen Außendurchmesser zu dem minimalen Außendurchmesser und die Durchmesservariationsperiode (n) geeignet sind, sodass die Feder (3) oder die Reihe an Ringen (4) in dem Bereich des maximalen Außendurchmessers gegen die Zunge und den Gaumen des Tieres drückt, wenn die Zähne des Tieres auf beide benachbarten Bereiche des minimalen Außendurchmessers beißen.

2. Schutzgegenstand (1) für ein längliches flexibles Objekt (2) nach Anspruch 1, **dadurch gekennzeichnet, dass** das Verbindungselement (5) eine zylindrische Hülse ist, die einen Ring (4) aufweist, der an der Außenfläche der Hülse, koaxial zu der zylindrischen Hülse, befestigt ist.

3. Schutzgegenstand (1) für ein längliches flexibles Objekt (2) nach Anspruch 2, **dadurch gekennzeichnet, dass** das Verbindungselement (5) eine Länge innerhalb des Bereichs zwischen 0,05 cm und 5 cm aufweist.

4. Schutzgegenstand (1) für ein längliches flexibles Objekt (2) nach Anspruch 2 oder 3, **dadurch gekennzeichnet, dass** der Ring (4) aus Draht oder aus einer planaren Scheibe gefertigt ist, wobei der Durchmesser des Drahtes oder die Dicke der planaren Scheibe oder der Durchmesser des Federdrahtes im Bereich zwischen 0,02 cm und 0,5 cm ist.

5. Schutzgegenstand (1) für ein längliches flexibles Objekt (2) nach einem der Ansprüche 1 bis 4, **dadurch gekennzeichnet, dass** der Draht der Feder oder der Ring (4) aus Metall, Metalllegierung oder anderen Materialien gefertigt ist, deren Härte Härtewerten zwischen HRG und HRA auf der Rockwell-Skala entspricht.

6. Schutzgegenstand (1) für ein längliches flexibles Objekt (2) nach einem der Ansprüche 1 bis 5, **dadurch gekennzeichnet, dass** der Außendurchmesser der Feder (3) oder des Rings (4) zwischen 0,5 cm und 7 cm ist.

7. Schutzgegenstand (1) für ein längliches flexibles Objekt (2) nach einem der Ansprüche 1 bis 6, **dadurch gekennzeichnet, dass** der Schutzgegenstand (1) eine Länge innerhalb des Bereichs zwischen 5 cm und 200 cm aufweist.

8. Schutzgegenstand (1) für ein längliches flexibles Objekt (2) nach einem der Ansprüche 1 bis 7, **dadurch gekennzeichnet, dass** der Abstand zwischen den Bereichen mit maximalem Außendurchmesser und/oder den Bereichen mit minimalem Außendurchmesser zwischen 2 cm und 10 cm ist.

9. Schutzgegenstand (1) für ein längliches flexibles Objekt (2) nach einem der Ansprüche 1 bis 8, **dadurch gekennzeichnet, dass** das Verhältnis des maximalen Außendurchmessers zu dem minimalen Außendurchmesser zwischen 1 und 10 ist.

10. Schutzgegenstand (1) für ein längliches flexibles Objekt (2) nach einem der Ansprüche 1 bis 9, **dadurch gekennzeichnet, dass** die parallele Projektion der einzelnen Spule der Feder oder eines einzelnen Rings (4) eine geometrische Figur einer im Wesentlichen zylindrischen, elliptischen oder polygonalen Form ist.

11. Längliches flexibles Objekt (2) mit einem Schutzgegenstand (1), der als Schutz vor Beißen und Kauen durch ein Tier dient, wobei der Schutzgegenstand (1) auf zumindest einem Teil des länglichen flexiblen Objekts (2) platziert ist, **dadurch gekennzeichnet, dass** der Schutzgegenstand (1) ein Schutzgegenstand (1) nach einem der Ansprüche 1 bis 10 ist.

12. Längliches flexibles Objekt (2) mit einem Schutzgegenstand (1) nach Anspruch 11, **dadurch gekennzeichnet, dass** die Enden des Schutzgegenstands (1) an dem länglichen flexiblen Objekt (2) mit Klammern (6) an einem elastischen Kissen oder mit Metallklammern befestigt sind oder in das Material des länglichen flexiblen Objekts (2) eingenäht oder eingewebt sind.

13. Längliches flexibles Objekt (2) mit einem Schutzgegenstand (1) nach Anspruch 11 oder Anspruch 12, **dadurch gekennzeichnet, dass** das längliche flexible Objekt (2) eine Leine, ein Stromkabel, eine Hydraulikleitung, ein Stromversorgungskabel, ein Netzkabel, ein Hochspannungsdraht, ein Kopfhörerkabel oder ein elektrisches Ladekabel ist.

## Revendications

1. Élément de protection (1) pour objet longiforme flexible (2), l'élément de protection (1) servant de protection contre la morsure et la mastication causées par un animal sur l'objet longiforme flexible (2) et étant placé sur au moins une partie de l'objet longiforme flexible (2), dans lequel l'élément de protection (2) est un ressort (3) constitué de fil métallique ou d'un ensemble d'anneaux (4) disposés coaxialement sur un objet de liaison (5), le pas du ressort ou la distance entre les anneaux adjacents étant compris dans la plage allant de 0,05 cm à 5 cm, **caractérisé en ce que** le diamètre extérieur du ressort (3) ou des anneaux (4) varie périodiquement sur la longueur totale de l'élément de protection (1), avec au moins deux zones ayant un diamètre extérieur maximum et au moins deux zones ayant un diamètre extérieur minimum, formant au moins deux périodes (n) de variation du diamètre extérieur du ressort (3) ou des anneaux (4), dans lequel le rapport entre le diamètre extérieur maximal et le diamètre extérieur minimal et la période de variation de diamètre (n) permettent au ressort (3) ou à l'ensemble d'anneaux (4) au niveau de la zone de diamètre extérieur maximal de pousser contre la langue et le palais de l'animal lorsque les dents de l'animal mordent sur les deux zones de diamètre extérieur minimal adjacentes.

2. Élément de protection (1) pour objet longiforme flexible (2) selon la revendication 1, **caractérisé en ce que** l'objet de liaison (5) est un manchon cylindrique ayant un anneau (4) fixé à la surface extérieure du manchon, coaxial avec ledit manchon cylindrique.

3. Élément de protection (1) pour objet longiforme flexible (2) selon la revendication 2, **caractérisé en ce que** l'objet de liaison (5) a une longueur dans la plage comprise entre 0,05 cm et 5 cm.

4. Élément de protection (1) pour objet longiforme flexible (2) selon la revendication 2 ou 3, **caractérisé en ce que** l'anneau (4) est constitué de fil métallique ou d'une rondelle plate, dans lequel le diamètre du fil métallique ou l'épaisseur de la rondelle plate ou le diamètre du fil de ressort se situe dans la plage comprise entre 0,02 cm et 0,5 cm.

5. Élément de protection (1) pour objet longiforme flexible (2) selon l'une quelconque des revendications 1 à 4, **caractérisé en ce que** le fil ou l'anneau (4) de ressort est en métal, alliage métallique ou autres matériaux, dont la dureté correspond aux valeurs de dureté entre HRG et HRA sur l'échelle de Rockwell.

6. Élément de protection (1) pour objet longiforme flexible (2) selon l'une quelconque des revendications 1 à 5, **caractérisé en ce que** le diamètre extérieur du ressort (3) ou de l'anneau (4) est compris entre 0,5 cm et 7 cm.

7. Élément de protection (1) pour objet longiforme flexible (2) selon l'une quelconque des revendications 1 à 6, **caractérisé en ce que** l'élément de protection (1) a une longueur dans la plage comprise entre 5 cm et 200 cm.

8. Élément de protection (1) pour objet longiforme flexible (2) selon l'une quelconque des revendications 1 à 7, **caractérisé en ce que** la distance entre les zones ayant un diamètre extérieur maximal et/ou les zones ayant un diamètre extérieur minimal est comprise entre 2 cm et 10 cm.

9. Élément de protection (1) pour objet longiforme flexible (2) selon l'une quelconque des revendications 1 à 8, **caractérisé en ce que** le rapport entre le diamètre extérieur maximal et le diamètre extérieur minimal est compris entre 1 et 10.

10. Élément de protection (1) pour objet longiforme flexible (2) selon l'une quelconque des revendications 1 à 9, **caractérisé en ce que** la projection parallèle d'une seule bobine ou d'un seul anneau (4) du ressort est une figure géométrique de forme sensiblement cylindrique, elliptique ou polygonale.

11. Objet longiforme flexible (2) avec un élément de protection (1) servant de protection contre la morsure et la mastication par un animal, dans lequel l'élément de protection (1) est placé sur au moins une partie de l'objet longiforme flexible (2), **caractérisé en ce que** l'élément de protection (1) est un élément de protection (1) tel que défini dans l'une quelconque des revendications 1 à 10.

12. Objet longiforme flexible (2) avec un élément de protection (1) selon la revendication 11, **caractérisé en ce que** les extrémités de l'élément de protection (1) sont fixées à l'objet longiforme flexible (2) avec des pinces (6) sur un coussinet élastique ou avec des pinces métalliques ou sont cousues ou tissées dans le matériau de l'objet longiforme flexible (2).

13. Objet longiforme flexible (2) avec un élément de protection (1) selon la revendication 11 ou la revendication 12, **caractérisé en ce que** l'objet longiforme flexible (2) est une laisse, un cordon électrique, un conduit hydraulique, un câble d'alimentation, un câble réseau, un fil haute tension, un câble de casque d'écoute ou un câble de chargeur électrique.
